# EUROPEAN PATENT APPLICATION

(11) **EP 2 639 695 A2**
(43) Date of publication of application: **18.09.2013**
(21) Application number: 13158088.8
(22) Date of filing: 07.03.2013
(51) Int. Cl.: G06F 9/54, G06F 3/048, H04M 1/72

(54) **Apparatus and method for centralized application notifications**

(30) Priority: 13.03.2012 US 201213418572
(71) Applicant: Samsung Electronics Co., Ltd, Gyeonggi-do 443-742 (KR)
(72) Inventor: Satyan, Pallavi, Santa Clara, CA (US)
(74) Representative: Jenkins, Richard Gavin

(57) **Abstract**

An apparatus and a method for centralized notification management in a mobile terminal are provided. The apparatus includes a communication unit for receiving notification data from an external device, at least one application, each application having a notification function for notifying a user when corresponding notification data is received, a display unit, a notification management unit for generating a user interface for managing the notifications of the at least one application, and for generating notification settings for each of the at least application settings, according to user input, a storage unit for storing the notification settings generated by the notification management unit, and a controller for controlling the display unit to display the user interface generated by the notification management unit and for controlling the mobile terminal to generate a notification in response to receiving the notification data, the notification generated according to the stored notification settings.

## Description

### BACKGROUND OF THE INVENTION

### 1. Field of the Invention:

The present invention relates to an apparatus and method for application notifications. More particularly, the present invention relates to an apparatus and method for providing centralized application notifications.

### 2. Description of the Related Art:

Mobile terminals are developed to provide wireless communication between users. As technology has advanced, mobile terminals now provide many additional features beyond simple telephone conversation. For example, mobile terminals are now able to provide additional functions such as an alarm, a Short Messaging Service (SMS), a Multimedia Message Service (MMS), E-mail, games, remote control of short range communication, an image capturing function using a mounted digital camera, a multimedia function for providing audio and video content, a scheduling function, and many more. With the plurality of features now provided, a mobile terminal has effectively become a necessity of daily life.

These and other functions of mobile terminals are often performed by applications running on the mobile terminal, often referred to as 'lapps'. Many applications provide notifications to inform the user of changed conditions or new content. For example, an E-mail application may issue a notification when a new E-mail has been received. Similarly, a social networking application may issue a notification when a friend is located nearby. These notifications may have various forms depending on the mobile terminal. For example, the mobile terminal may use an audible alarm to signal a notification, or flash LEDs provided on the mobile terminal in a particular manner. Similarly, a notification may appear in a status bar, on an idle screen, on a home page, or as part of an application icon. The notification may appear as an icon or as a pop-up window.

The user typically manages notifications on a per-application basis. In order to manage the notifications for an E-mail application, the user executes the E-mail application, navigates to a setting page, and sets the notifications for the E-mail application. If the user would like to change the settings for a different application, the user must perform a similar process for that application. While some mobile terminals do allow the user to turn notifications on or off from a centralized user interface, or control the intensity of an alarm or vibration, more fine-tuned control is generally performed through each application. As a result, it is difficult for the user to manage or coordinate the various notification schemes of different applications on the mobile terminal. Accordingly, there is a need for an apparatus and method for providing an improved notification management system.

### SUMMARY OF THE INVENTION

Aspects of the present invention are to address at least the above-mentioned problems and/or disadvantages and to provide at least the advantages described below. Accordingly, an aspect of the present invention is to provide an apparatus and method for centralized management of application notifications.

In accordance with an aspect of the present invention, a mobile terminal is provided. The method includes a communication unit for receiving notification data from an external device, at least one application, each application having a notification function for notifying a user when corresponding notification data is received, a display unit, a notification management unit for generating a user interface for managing the notifications of the at least one application, and for generating notification settings for each of the at least application settings, according to user input, a storage unit for storing the notification settings generated by the notification management unit, and a controller for controlling the display unit to display the user interface generated by the notification management unit and for controlling the mobile terminal to generate a notification in response to receiving the notification data, the notification generated according to the stored notification settings.

In accordance with another aspect of the present invention, a method of adjusting notification settings in a mobile terminal according to context is provided. The method includes generating a notification in the mobile terminal according to stored notification settings, in response to receiving notification data from an external device, waiting for a user of the mobile terminal to respond to the notification, when the user responds to the notification or fails to respond after a predetermined period, recording information about the notification and the user's response thereto, and adjusting the stored notification settings according to the recorded information.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a diagram of a mobile terminal according to an exemplary embodiment of the present invention;

FIGs. 2A-2D show a user interface for a notification management unit according to an exemplary embodiment of the present invention;

FIG. 3 shows a notification importance setting screen according to exemplary embodiments of the present invention; and

FIG. 4 is a flowchart of a method for context-sensitive notification management according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding, but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.

The terms and words used in the following description and claims are not limited to the bibliographical meanings, but are merely used by the inventor to enable a clear and consistent understanding of the invention. Accordingly, it should be apparent to those skilled in the art that the following description of exemplary embodiments of the present invention are provided for illustration purposes only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention include an apparatus and method for centralized notification management. While the apparatus described herein is referred to as a mobile terminal, exemplary embodiments of the present invention may be applied to any type of portable device, such as a smart phone, laptop, Personal Digital Assistant (PDA), feature phone, portable music player, personal entertainment device, and the like.

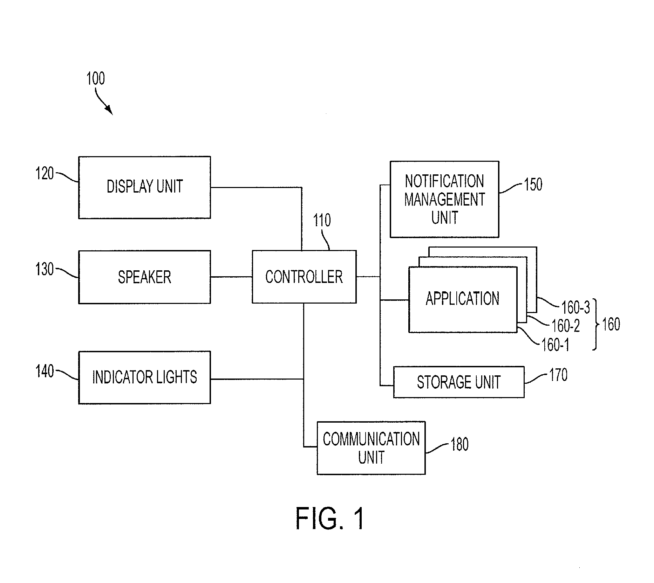

FIG. 1 is a diagram of a mobile terminal according to an exemplary embodiment of the present invention.

Referring to FIG. 1, a mobile terminal 100 may include a controller 110, a display unit 120, a speaker 130, indicator lights 140, a notification management unit 150, a plurality of applications 160-1, 160-2, and 160-3 (hereinafter collectively referred to as the applications 160), a storage unit 170, and a communication unit 180. According to exemplary embodiments of the present invention, one or more of these components may be omitted (such as, for example, the indicator lights 140), or additional components may be included. Similarly, two or more of the above components may be integrated into a single component.

It would be understood that the units described above may be implemented as hardware components, software components, or a combination thereof. For example, the speaker 130 may be understood as referring only to a physical speaker component, or to a combination of the physical speaker component and software drivers for generating a signal to be output by the physical speaker component. Similarly, the application 160-1 may include software code and related data stored in the storage unit 170 that, when executed by the controller 110, cause the mobile terminal 100 to carry out the functions of the application 160-1. It would be understood by a person of ordinary skill in the art that at least some of the units of the mobile terminal 100 would require a hardware component in order to carry out their respective functions.

The controller 110 controls overall operations of the mobile terminal 100. The controller 110 may be a Central Processing Unit (CPU) of the mobile terminal, which executes an Operating System (OS) (not shown) stored in the storage unit 170. The controller 110 may also execute instructions of the notification management unit 150 and the applications 160. In addition, the controller 110 controls operations of the display unit 120 and the speaker 130.

The applications 160 provide a variety of features to the user. The applications 160 may include an E-mail application, a social network application (such as Facebook™), games, news programs, and the like. The applications 160 may be pre-installed by a manufacturer of the mobile terminal 100 or downloaded by the user. Some of the applications 160 include a notification function for notifying the user of useful information. The purpose of the notification may vary from application to application. An E-mail application may notify the user when new E-mail is received. A news application may notify the user when a news article has been posted. Other applications may provide similar notifications to the user.

The display unit 120 displays a user interface to the user that provides a single screen to manage notification for each of the applications 160. The display unit 120 may also display notifications to the user. These notifications may be displayed as an icon in a status bar, idle page, or home page; as a pop-up window, or as a component of an application window. The notifications may also be displayed in other formats on the display unit 120.

The display unit 120 may be provided as a Liquid Crystal Display (LCD). In this case, the display unit 120 may include a controller for controlling the LCD, a video memory in which image data is stored and an LCD element. If the LCD is provided as a touch screen, the display unit 120 may perform a part or all of the functions of an input unit (not shown).

Notifications may also be communicated to the user via the indicator lights 140 and the speaker 130. For example, the indicator lights 140 may be activated, lighted with different colors, or flash in response to a notification. The behavior of the indicator lights 140 may vary according to an importance of type of the notification. Similarly, the speaker may be used to generate an audible notification (such as a ring). Additional components, not shown in FIG. 1, may also be employed. For example, the mobile terminal may be equipped with a vibration device to vibrate the mobile terminal 100 when a notification is received. The indicator lights may be provided as Light Emitting Diodes (LEDs) as show in FIG. 1, and may be provided separately or integrated with one or more key input units (not shown).

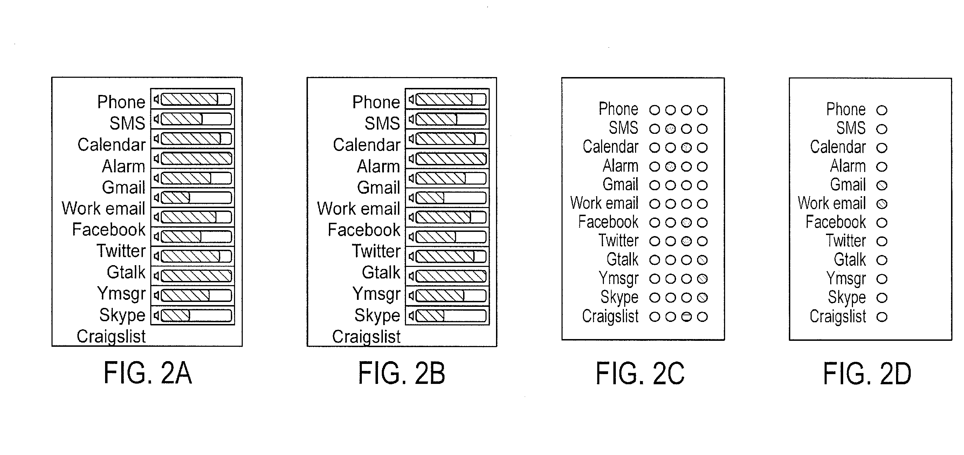

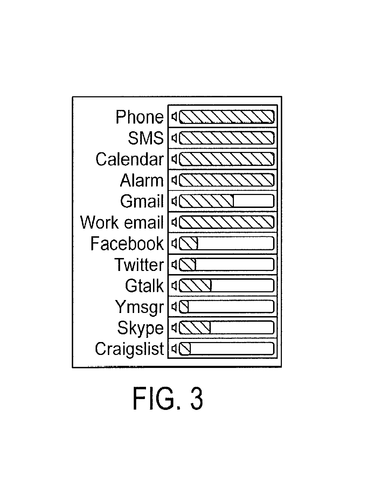

The notification management 150 manages notifications for the applications 160 on behalf of the user. The notification management unit 150 provides a single point for management of the notifications provided by the applications 160. Instead of accessing applications individually to manage notifications, the user may employ a user interface provided by the notification management unit 150 to manage notifications for each of the applications 160 in one place. Examples of this user interface are described below with respect to FIGs. 2A-2D and 3.

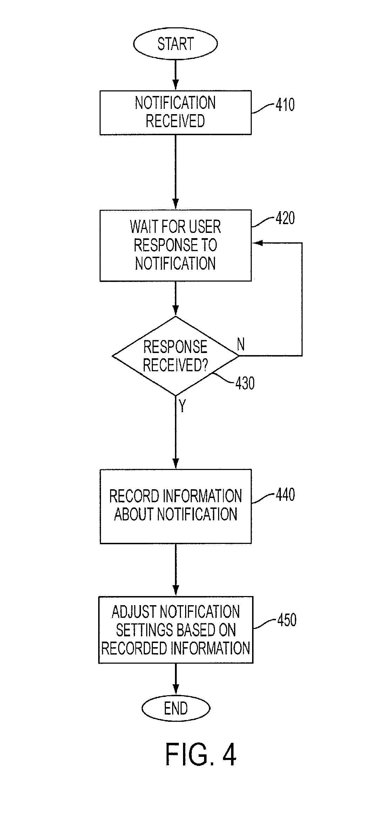

The notification management unit 150 may also manage notification profiles. Notification profiles are saved notification settings for each of the applications 160, and may be set by the user for particular locations or times. According to another exemplary embodiment of the present invention, a notification profile may be generated according to the user's pattern of behavior with respect to notifications. This process is described below with respect to FIG. 4.

The notification management unit 150 may be a stand-alone unit or application as shown in FIG. 1. Alternatively, the notification management unit 150 may be a component of the mobile terminal OS. The notification management unit 150 and/or the OS may provide an Application Programming Interface (API) to enable the applications 160 to take advantage of the centralized notification management provided by the notification management unit 150.

The storage unit 170 stores data associated with the mobile terminal 100, the notification management unit 150, the applications 160, and other components of the mobile terminal 100. For example, user notification settings and profiles managed by the notification management unit 150 are stored in the storage unit 170. The storage unit 170 may be, for example, a hard drive, flash memory, or the like.

The communication unit 180 communicates with external devices, including other mobile terminals, base stations, servers, and the like. The communication unit 180 may include a receiver that receives notification data from an external device, such as a server associated with a particular application. The notification data may include notification messages or data which the corresponding application determines as requiring a notification. For example, a social networking server associated with a social networking application may transmit a notification message indicating that a friend has posted an update. Upon receiving the notification message, the controller 110 controls the mobile terminal 100 to generate a notification according to the settings managed by the notification management unit 150. On the other hand, an E-mail application may automatically receive new E-mail messages from an E-mail server. When the E-mail application receives the E-mail messages, the E-mail application may generate a notification according to the notification settings.

FIGs. 2A-2D show a user interface for a notification management unit according to an exemplary embodiment of the present invention.

Referring to FIGs. 2A-2D, each screen provides a mechanism for the user to individually set a particular notification mechanism. FIG. 2A provides a user interface to enable the user to control sound settings for notifications. While the sound settings are shown as a bar in FIG. 2A, the particular user interface mechanism may vary, and may be modified according to the capabilities of the mobile terminal 100. For example, a user interface as shown in FIG. 2A may be provided for a mobile terminal having a touch screen, while a user interface having arrows and a focus highlight may be employed for a mobile terminal employing key input units.

Each screen shown in FIGs. 2A-2D provides a single screen for the user to manage corresponding notifications for each application. For example, the screen shown in FIG. 2A allows the user to control audio notifications for each application. An alarm application may be set to a high sound setting, while other applications may have a low sound setting or have sound disabled for notifications. FIGS. 2B-2D show similar screens for managing vibration settings, indicator light settings, and status bar notifications. The screens may vary depending upon the notification schemes available on the mobile terminal 100; a mobile terminal which does not have indicator lights may omit the indicator light screen. The user may store the settings in the storage unit 170 as a profile.

A profile refers to saved notification settings for each of the applications 170. The user may create a profile having notification settings appropriate for a particular time or location. For example, when the user is at work, the user may set a work profile in which work-related notifications are given high importance, via a loud alarm sound or vibration, and other notifications are given a lower importance, such as a status bar icon or pop-up, or disabled entirely.

The user may configure the notification management unit 150 to automatically load a notification profile during a particular time of day or when the mobile terminal 100 is in a particular location. For example, during business hours the notification management unit 150 may activate a work profile, and set the notification settings for each of the applications 160 according to the settings contained in the work profile. The notification management unit 150 may provide a profile management screen (not shown). Through the profile management screen, the user may create or edit profiles, set conditions (e.g., time or location) in which a certain profile is to be used, set a previously stored profile, and perform other profile management operations.

According to an exemplary embodiment of the present invention, the mobile terminal 100 may have default profiles pre-installed, such as "work" or "home". In these profiles, notification settings that might be useful for work or home settings may be pre-defined. The user may then modify these default profiles as appropriate or create new ones as described above.

As described above, a profile may be loaded according to a time of day or location. The mobile terminal may include one or more applications or components that allow the mobile terminal 100 to determine the current time and/or the current location of the mobile terminal 100. For example, the mobile terminal 100 may include a clock function and Global Positioning System (GPS) unit (not shown) to determine a time of day and location of the mobile terminal 100. In a cellular network, the mobile terminal 100 may employ triangulation to determine the current location.

FIG. 3 shows a notification importance setting screen according to exemplary embodiments of the present invention.

Referring to FIG. 3, the notification management unit 150 may also provide a notification importance setting for each of the applications 160. The user may set an importance of each application using a screen such as the screen shown in FIG. 3. The importance of an application determines the nature of notifications generated by that application.

The intensity and type of notification may scale with the importance of the corresponding application. The type and intensity of the notification may vary according to the importance of the corresponding application. Certain notification mechanisms may be reduced or disabled depending on the importance setting. For example, an alarm may sound at 0% volume at a setting of 0% importance, at 50% volume at a setting of 50% importance, and at full volume at a setting of 100% importance. Similarly, a pop-up window may be displayed at a high importance setting, while an icon may be displayed at a medium importance setting, and nothing displayed at a low importance setting.

According to another example, when an application is set to 50% importance, audible notifications may be disabled entirely for that notification, while vibrations may remain enabled. At 25% importance, vibrations may be disabled along with audio, and only a status bar icon or pop-window may be displayed. Finally, at 0% importance, all notifications may be disabled. Such a system may reflect the concept that audible notifications may be considered more important than non-audible notifications, and thus may be used only for notifications having a high importance. Similarly, the indicator lights 140 may be activated with different colors, flashes, or disabled entirely based on the importance setting

The notification importance setting screen shown in FIG. 3 may be combined with the setting screens shown in FIGs. 2A-2D. A user interface element (not shown) may be provided to enable a user to move between the notification importance setting screen of FIG. 3 and the setting screens shown in FIGs. 2A-2D. Similarly, a user interface element may be provided to enable a user to manage notification settings for an individual application. This element may activate another screen provided by the notification management unit 150, or may execute the corresponding application to enable the user to manage the notifications within the selected application.

The settings made by the notification management unit 150 may override the settings of each individual application. For example, when application 160-1 triggers a notification, the notification will be performed according to the settings within the notification management unit 150, not the settings defined in the application 160-1. Similarly, the notification management unit 150 or the OS may provide an API to allow the application 160-1 to change the settings for the application 160-1 within the notification management unit 150. In this case, when the user changes a notification setting for the application 160-1 within the application 160-1, these changes may be reflected within the settings managed by the notification management unit 150.

According to another exemplary embodiment of the present invention, an API may be provided to allow the user to access the notification management unit 150 from within the applications 160. For example, when the user selects a notification setting icon or similar user interface element within the application 160-1, the controller 110 executes the notification management unit 150 to enable the user to change the notification settings for the application 160-1. In this case, a user interface element or other option may be provided to allow the user to return to the application 160-1 once the user has made the desired changes to the notification settings.

According to the exemplary embodiments described above, the user creates and manages each profile manually. However, the profiles may also be generated by the notification management unit 150 according to the user's behavior with respect to notifications at different times and locations. An exemplary process is described below with respect to FIG. 4.

FIG. 4 is a flowchart of a method for context-sensitive notification management according to an exemplary embodiment of the present invention.

Referring to FIG. 4, the notification management unit 150 may adjust notification settings according to a current context, such as a current location or time. By monitoring the user's interaction with notifications, the notification management unit 150 learns how notifications should best be presented to the user in a given context. FIG. 4 shows an example of this process.

In step 410, the mobile terminal 100 receives notification data and presents the notification to the user according to the notification settings defined for the associated application. The notification management unit 150 detects the notification and waits for the user to respond to the notification in step 420. In step 430, the notification management unit 150 determines whether the user has responded to the notification. If the user has not responded to the notification, the notification management unit 150 continues to wait for a response in step 420.

The notification management unit 150 may interpret several types of actions as a response. For example, a response may occur when the user accesses the application that generated the notification, or when the user dismisses the notification (e.g., by turning off the alarm or dismissing a pop-up window). In addition, the notification management unit 150 may interpret the user's failure to respond to the notification after a predetermined time as a response in itself.

In step 440, the notification management unit 150 records information about the response. The information may include a location and time when the notification was generated and a location and time when the user responded to the notification. The information may also include how the user responded to the notification, such as whether the user opened the application, dismissed the notification, or did not respond to the notification after a predetermined period of time.

In step 450, the notification management unit 150 adjusts the notification settings for the applications based on the recorded information. The notification management unit 150 may omit this step if not enough information has been recorded to adjust the notification settings accurately. However, once enough information has been recorded, the notification management unit 150 may use the recorded information to adjust the notification settings in a context-sensitive way. If the user consistently responds to notifications from a particular application quickly, the notification management unit 150 may conclude that the application is important and increase the application's importance setting. On the other hand, if the user rarely responds to a notification within a certain time, the notification management unit 150 may conclude that the application is unimportant and reduce the application's importance setting.

Adjustments may be made according to any of the information recorded in step 440. For example, if the notification management unit 150 determines that the user responds to E-mail notifications quickly in the morning, but waits for a longer time before responding in the afternoon, the notification management unit 150 may increase the importance of E-mail notifications in the morning and decrease the importance of the E-mail notifications in the afternoon. Similarly, if the notification management unit 150 determines that the user does not respond to social network application notifications while at work, but waits to respond until arriving home, the notification management unit 150 may reduce the importance of social network application notifications while the user is at work.

The method shown in FIG. 4 is merely one example of how the notification management unit 150 may adjust notification settings in a context-sensitive way. Other similar methods or modifications would also be apparent to a person of ordinary skill. For example, if the notification management unit 150 initially determines that the user has not responded to a notification (because there was no response after a predetermined time), but later determines that the user has responded to the notification, the notification management unit 150 may update the recorded information to reflect the time, location, and length of wait until response.

According to the exemplary embodiments described above, the mobile terminal 100, via the notification management unit 150, enables a user to manage notifications for every application in the mobile terminal from a central location. The user therefore does not need to access each application individually, thereby improving the user's experience with the mobile terminal. Additionally, the mobile terminal may also adjust notification settings according to context, thereby enhancing the user's overall experience with notifications and the mobile terminal.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A mobile terminal, comprising:
a communication unit for receiving notification data from an external device;
at least one application, each application having a notification function for notifying a user when corresponding notification data is received;
a display unit;
a notification management unit for generating a user interface for managing the notifications of the at least one application, and for generating notification settings for each of the at least application settings, according to user input;
a storage unit for storing the notification settings generated by the notification management unit; and
a controller for controlling the display unit to display the user interface generated by the notification management unit and for controlling the mobile terminal to generate a notification in response to receiving the notification data, the notification generated according to the stored notification settings.

2. The mobile terminal of claim 1, further comprising at least one notification mechanism, which, when operated according to the control of the controller, presents the notification to the user.

3. The mobile terminal of claim 2, wherein the notification mechanism comprises at least one of:
a speaker for generating an alarm notification;
at least one indicator light; and
a vibration device for vibrating the mobile terminal.

4. The mobile terminal of claim 2, wherein the notification mechanism comprises at least one of:
an icon displayed on the display unit; and
a pop-up window displayed on the display unit.

5. The mobile terminal of claim 2, wherein the notification management unit generates a plurality of screens for display on the display unit, each screen corresponding to a notification mechanism, and each screen having a plurality of settings, each of the plurality of settings corresponding to one of the at least one application.

6. The mobile terminal of claim 2, wherein the notification management unit generates a notification importance screen to be displayed on the display unit, the notification importance screen having an importance setting for each of the at least one application, the importance setting being changeable by the user.

7. The mobile terminal of claim 6, wherein the controller controls the notification mechanism according to the importance setting corresponding to the application associated with the notification.

8. The mobile terminal of claim 1, wherein the notification management unit generates a notification importance screen to be displayed on the display unit, the notification importance screen having an importance setting for each of the at least one application, the importance setting being changeable by the user,
wherein the controller controls the mobile terminal to generate the notification according to the importance setting corresponding to the application associated with the notification.

9. The mobile terminal of claim 1, wherein, after the notification is generated, the notification management unit records information about the notification and the user's response to the notification.

10. The mobile terminal of claim 9, wherein the information about the notification includes at least one of the application associated with the notification, a time when the notification was generated, and a location of the mobile terminal when the notification was generated, and
wherein the information about the user's response to the notification includes whether the user dismissed the notification without executing the application associated with the notification, a location of the mobile terminal when the user responded to the notification, a time when the user responded to the notification, and an amount of time elapsed between the generation of the notification and the user's response.

11. The mobile terminal of claim 1, wherein the notification management unit generates a plurality of profiles according to the user's input, each of the plurality of profiles having notification settings for the at least one application,
wherein the notification management unit sets the notification settings of the at least one application according to one of the stored profiles in response to a response condition set by the user.

12. A method of adjusting notification settings in a mobile terminal according to context, the method comprising:
generating a notification in the mobile terminal according to stored notification settings, in response to receiving notification data from an external device;
waiting for a user of the mobile terminal to respond to the notification;
when the user responds to the notification or fails to respond after a predetermined period, recording information about the notification and the user's response thereto; and
adjusting the stored notification settings according to the recorded information.

13. The method of claim 12, wherein the recorded information comprises at least one of:
a time when the notification was generated;
a location of the mobile terminal when the notification was generated;
whether the user responded to the notification within the predetermined time;
how the user responded to the notification;
a time when the user responded to the notification; and
a location of the mobile terminal when the user responded to the notification.

14. The method of claim 12, wherein the generating of the notification comprises at least one of:
outputting an alarm via speakers of the mobile terminal;
vibrating the mobile terminal;
activating one or more indicator lights of the mobile terminal;
displaying an icon in a status bar of a user interface displayed on the mobile terminal; and
displaying a pop-up window.

15. The method of claim 14, wherein the adjusting of the notification settings comprises at least one of:
adjusting a volume of the alarm;
adjusting a strength of the vibration;
adjusting whether the indicator lights are displayed; and
adjusting the display of an icon or a pop-up window.
